# DEMANDE DE BREVET EUROPEEN

(11) **EP 4 512 782 A2**
(43) Date de publication de la demande: **26.02.2025**
(21) Numéro de dépôt: 24217042.1
(22) Date de dépôt: 13.12.2019
(51) Int. Cl.: C02F 3/34

(54) **PROCÉDÉ DE CARBONATATION ET DE MINÉRALISATION EN LIGNE D'EAU DÉMINÉRALISÉE**

(30) Priorité: 14.12.2018 BE 201805889; 11.04.2019 BE 201905240
(62) Demande divisionnaire de: 19816805.6
(71) Demandeur: Aqvita Srl., 1180 Uccle (BE)
(72) Inventeur: Tob, Philippe, 1180 Uccle (BE)
(74) Mandataire: De Clercq & Partners

(57) **Abrégé**

L'invention propose un procédé de minéralisation d'eau en ligne selon lequel on fait circuler de l'eau déminéralisée dans un canal à l'intérieur duquel sont immobilisées des enzymes pour catalyser la réaction du dioxyde de carbone et de l'eau pour former du bicarbonate, on introduit du dioxyde de carbone dans le canal, et on introduit dans l'eau circulant une quantité prédéterminée de minéraux solides, de préférence du carbonate de calcium et/ou de magnésium. Le procédé permet d'accélérer la dissolution du dioxyde de carbone dans l'eau ce qui permet d'optimiser la dissolution des minéraux pour minéraliser l'eau en ligne, c'est-à-dire sans arrêter la circulation de l'eau. L'invention propose également un système permettant de mettre en œuvre le procédé.

## Description

L'invention se situe dans le domaine de la (re-)minéralisation d'eau.

Certaines techniques de purification ou d'assainissement d'eau comprennent une étape de déminéralisation. C'est notamment le cas par exemple, à une échelle industrielle, de la désalinisation d'eau de mer, ou à une échelle domestique de la déminéralisation d'eau de ville.

L'eau qui a été, au moins en partie, purifiée de ses minéraux est généralement légèrement acide, ce qui la rend corrosive et à long terme peut détériorer les canalisations qu'elle parcourt. Elle a aussi une saveur très fade ce qui la rend désagréable à consommer.

Il est donc courant de reminéraliser l'eau désalinisée ou déminéralisée, notamment avec des carbonates de magnésium et de calcium, afin d'en relever le pH et/ou d'en modifier la saveur. Néanmoins, le faible taux de dissolution de ces minéraux dans l'eau est un facteur limitant et il faut agiter, pendant plusieurs heures, des poudres minérales fines dans un volume d'eau pour atteindre une concentration déterminée en carbonates de calcium et/ou magnésium, concentration qui reste néanmoins limitée. Cette méthode n'est pas efficace industriellement, ni applicable à des appareils domestiques dont les dimensions doivent rester limitées. Les concentrations en carbonates de calcium et/ou de magnésium obtenues par cette méthode restent, de plus, bien inférieure à celle des eaux minérales.

Il a été démontré dans Desalinisation 396, (2016) 39-47*,* qu'il est possible d'améliorer le taux de dissolution des carbonates de magnésium et de calcium en acidifiant préalablement l'eau avec du dioxyde de carbone (CO₂) ou de l'acide sulfurique, ce dernier permettant de dissoudre 8 à 9 fois plus de minéraux qu'avec du dioxyde de carbone. Cette différence est principalement due au fait qu'un pH plus faible peut être atteint avec l'acide sulfurique, un acide fort, qu'avec le dioxyde de carbone, formant un acide faible lorsqu'il est dissout dans l'eau. Ceci est aussi la conséquence du faible taux de dissolution du dioxyde de carbone dans l'eau.

Il n'est cependant pas souhaitable, ni industriellement, ni dans des installations domestiques, d'utiliser de l'acide sulfurique, à cause des risques bien connus associés à sa manipulation (brûlures, corrosion...) .

Il a donc été jugé nécessaire par la demanderesse de développer un procédé ainsi qu'un système permettant la minéralisation instantanée en ligne et de façon contrôlée, d'eau préalablement déminéralisée, au moins en partie.

### Solution de l'invention

A cet effet, la présente invention propose un procédé instantané de minéralisation d'eau en ligne selon lequel :
- on fait circuler de l'eau déminéralisée dans un canal à l'intérieur duquel sont immobilisées des enzymes pour catalyser la réaction du dioxyde de carbone et de l'eau pour former du bicarbonate
- on introduit du dioxyde de carbone dans le canal, et
- on introduit dans l'eau circulant une quantité prédéterminée de minéraux solides, de préférence du carbonate de calcium et/ou de magnésium.

Les attributs « instantané » et « en ligne » signifie que l'eau circule en permanence le long du canal et n'est à aucun moment stockée dans un réservoir pour y subir une étape de traitement ou de dissolution de minéraux.

Par eau déminéralisée, on entend ici une eau à faible teneur en minéraux voire dénuée de minéraux, et en particulier de magnésium et calcium. La faible teneur en minéraux peut être obtenue naturellement, par exemple pour une eau de source, ou artificiellement, par des procédés de désalinisation comme l'osmose inverse, l'utilisation de résines, l'évaporation et recondensation. Une faible teneur en minéraux correspond de préférence à un résidu minéral à sec inférieur à 500 mg/L et de préférence encore inférieur à 100 mg/L.

Le canal dont il est question désigne de façon générale une conduite avec une entrée d'eau et une sortie d'eau entre lesquelles l'eau peut circuler, c'est-à-dire avoir un débit calculable.

On peut introduire le dioxyde de carbone dans le canal en y faisant buller du dioxyde de carbone gazeux via l'utilisation d'un bulleur classique ou à travers une membrane.

Alternativement, le canal est perméable au dioxyde de carbone et imperméable à l'eau sur au moins une partie de sa longueur et on introduit le dioxyde de carbone dans le canal par application sur la paroi extérieure du canal d'une pression de dioxyde de carbone.

Le canal peut par exemple être un tuyau dont la paroi est une membrane perméable au dioxyde de carbone. Il peut également s'agir d'une pluralité des faisceaux parallèles, comme par exemples des fibres creuses dont les parois sont des membranes perméables au dioxyde de carbone. Cette configuration présente l'avantage d'augmenter la surface de contact entre l'eau et les parois, c'est-à-dire avec les pores permettant l'adsorption du dioxyde de carbone dans l'eau circulant dans le canal, sans que l'eau ne fuie vers l'extérieur de la fibre, et avec les enzymes immobilisées à l'intérieur du canal.

Les enzymes catalysant la réaction du dioxyde de carbone et de l'eau pour former de l'acide carbonique puis du bicarbonate sont de préférence de l'anhydrase carbonique. Cette enzyme, de la classe EC 4.2.1.1, est bien connue pour améliorer le taux de dissolution du CO₂ dans l'eau mais n'a jamais été utilisée en ligne, en combinaison avec des moyens d'injection de poudre minérales, ni d'autres moyens de dissolution de minéraux, pour en optimiser la dissolution.

Les moyens d'immobilisation des enzymes à l'intérieur du canal sont les moyens classiques d'immobilisation d'enzymes sur des surfaces polymériques ou minérales, bien connus de l'homme du métier. Il peut par exemple s'agir d'une immobilisation par greffage des enzymes sur la face intérieure de la paroi/membrane ou alors sur des billes ou particules maintenues à l'intérieur du canal par des filtres ou des grilles dont le maillage permet le passage de l'eau mais pas des billes/particules.

Le terme « eau circulant » fait ici référence au fait qu'il n'y a pas de réservoir dans lequel de l'eau serait immobilisée le temps d'être agitée avec de la poudre minérale. Le procédé de l'invention est instantané, en ligne, et permet ainsi une mise en oeuvre industrielle, par exemple en aval d'une unité de désalinisation, ce qui est particulièrement intéressant par exemple pour alimenter un réseau d'eau de ville. Il permet également une mise en oeuvre domestique, en permettant un gain de place. L'absence de réservoir de mélange limite également le risque de développement bactérien dans de l'eau stagnante.

De préférence, on introduit dans l'eau circulant une quantité prédéterminée de minéraux solides, de préférence du carbonate de calcium et/ou de magnésium par injection d'une poudre minérale ou en faisant circuler l'eau à travers un lit minéral.

Par minéraux solides, il faut ici entendre que l'eau à reminéraliser entre en contact avec le minéral sous sa forme solide, et non pas pré-dissout dans une solution.

Le canal de l'invention peut donc être connecté à un injecteur de poudre ou comprendre une colonne minérale.

Dans le cas de l'injection, la poudre injectée est une poudre très fine ou fluidifiée, composée de particules ayant des diamètres de l'ordre de quelques microns, par exemple 5 à 1000 microns, qui présentent une grande fluidité et dont on peut mesurer un volume, de façon très similaire à des solutions liquides.

Ces poudres présentent l'avantage d'être conditionnables en cartouches peu encombrantes. Le dosage de petites quantités de poudre, i.e. quelques microlitres est possible à l'aide, par exemple, de technologies mises au point pour l'impression laser ou 3D, où des couches de poudres sont déposées. L'homme du métier peut néanmoins utiliser toute autre technologie adéquate pour le dosage de poudres fines.

Ces techniques permettent l'injection d'une quantité prédéterminée de poudre, c'est-à-dire d'une quantité définie à l'avance dans le but d'obtenir une quantité également prédéterminée de minéraux dissouts. Dans le cas de l'utilisation d'une colonne minérale, celle-ci comprend un lit de granules ou billes minérales, dont la granulométrie peut par exemple être comprise entre 0.5 et 4.5 mm.

Avantageusement, des billes minérales sont combinées/mélangées à des billes sur lesquelles sont greffées les enzymes catalysant la réaction du dioxyde de carbone et de l'eau pour former de l'acide carbonique puis du bicarbonate.

Alternativement, on introduit du dioxyde de carbone dans l'eau déminéralisée et on le dissout en faisant circuler l'eau déminéralisée sur les enzymes en amont de l'introduction des minéraux solides. Ainsi, les minéraux ne sont pas en contact avec les enzymes et le dioxyde de carbone. Le demandeur a trouvé, de façon surprenante, que l'équilibre de conversion du dioxyde de carbone en acide carbonique puis en carbonate était maintenu quelques instants, i.e. quelques secondes, laps de temps suffisant pour que l'eau ainsi acidifiée atteigne, en aval, la zone de dissolution des minéraux. Cela permet de ne pas avoir à mettre l'enzyme en contact avec les minéraux, ce qui la préserve et évite également la présence de traces d'enzymes dans l'eau reminéralisée. Bien que l'enzyme ne présente pas de toxicité, l'eau obtenue est ainsi réglementairement conforme. Cet avantage ne peut être obtenu avec des procédés où le mélange a lieu dans des réacteurs au lieu d'être « en ligne ».

La présente invention propose également un système pour mettre en oeuvre le procédé de l'invention. Il s'agit d'un système de reminéralisation d'eau, au moins en partie déminéralisée, comprenant un canal de circulation d'eau d'une entrée vers une sortie le long duquel sont agencés :
- des moyens d'introduction de dioxyde de carbone dans le canal ;
- des enzymes aptes à catalyser la réaction du dioxyde de carbone et de l'eau pour former du bicarbonate immobilisées à l'intérieur dudit canal, et
- des moyens d'introduction d'une quantité prédéterminée de
- carbonate de calcium et/ou de magnésium sous forme solide.

De préférence, les moyens d'introduction de dioxyde de carbone dans le canal comprennent une paroi perméable au dioxyde de carbone sur au moins une partie de la longueur du canal et des moyens pour appliquer une pression de dioxyde de carbone sur la face extérieure de ladite paroi perméable au dioxyde de carbone.

Les moyens pour appliquer une pression de dioxyde de carbone sur la face extérieure de la paroi perméable au dioxyde de carbone peuvent comprendre une chambre hermétique connectée à une arrivée de dioxyde de carbone sous pression et traversée par au moins la partie du canal comprenant la paroi perméable au dioxyde de carbone.

Avantageusement, un mélangeur statique, par exemple un insert hélicoïdal, permettant de créer une turbulence de l'eau qui y circule est disposé à la sortie du canal afin d'optimiser le mélange entre l'eau, le dioxyde de carbone dissout, et les minéraux ajoutés.

Les moyens d'introduction d'une quantité prédéterminée de carbonate de calcium et/ou de magnésium sous forme solide sont de préférence positionnés en aval des enzymes aptes à catalyser la réaction du dioxyde de carbone et de l'eau pour former du bicarbonate.

Les moyens d'introduction d'une quantité prédéterminée de carbonate de calcium et/ou de magnésium sont par exemple un injecteur à poudre et/ou une colonne minérale.

L'injecteur à poudre peut par exemple être un dispositif de microdosage qui dispense des micro-volumes de poudres, en fonction du débit de l'eau parcourant le canal. La fréquence à laquelle est dispensée la solution concentrée ou la poudres, ainsi que le volume dispensé est prédéterminé en fonction du débit de circulation de l'eau à reminéraliser pour optimiser l'efficacité de l'insert hélicoïdal et obtenir, en sortie du système, une eau de concentration sensiblement constante au cours du temps.

La colonne minérale peut par exemple être une colonne du type Akdolit ^{®} CM, comprenant un lit de particules de dolomie (roche comprenant au moins 50% de dolomite).

Avantageusement, le système pour mettre en oeuvre le procédé de l'invention est une cartouche comprenant l'entrée d'eau à reminéraliser et la sortie d'eau reminéralisée et les moyens d'introduction de dioxyde de carbone dans la cartouche, ladite cartouche contenant un mélange de des billes minérales et de billes sur lesquelles sont greffées les enzymes catalysant la réaction du dioxyde de carbone et de l'eau pour former de l'acide carbonique puis du bicarbonate. De préférence, les moyens d'introduction de dioxyde de carbone dans la cartouche sont agencés pour permettre la circulation du dioxyde de carbone à travers le lit de billes mélangées et l'entrée et la sortie d'eau sont agencés pour permettre la circulation de l'eau à travers de lit de billes mélangées.

Les billes minérales comprennent de préférence du carbonate de calcium et/ou de magnésium mais peuvent également comprendre de l'hydroxyde de magnésium ou/et hydroxyde de calcium et/ou dolomite ou/et magnésite (MgO).

Le terme bille n'implique pas une forme sphérique, une bille peut avoir une forme irrégulière.

Les billes minérales et les billes sur lesquelles sont greffées les enzymes ont de préférence le même ordre de taille, mais peuvent également avoir des dimensions différentes.

Les billes minérales ont par exemple une taille d grain entre 0.5 et 4.5 mm, comme dans les produits Akdolit^{®} Hydro-Calcit, qui comprend principalement du carbonate de calcium, ou Akdolit^{®} CM (Magno Dol), vendus par Rheinkalk Akdolit GmbH & Co. KG.

Les billes sur lesquelles sont greffées les enzymes peuvent par exemple avoir une granulométrie comprise entre 10 microns et 3,5mm.

Si la dissolution du CO₂ dans l'eau à l'aide d'une enzyme comme l'anhydrase carbonique est connue, c'est bien la combinaison de cette étape avec l'introduction de minéraux, notamment de carbonate de calcium et/ou de magnésium, de préférence sous forme solide, qui est le coeur de l'invention, pour reminéraliser instantanément et en ligne de l'eau à faible teneur en minéraux à une concentration prédéterminée en minéraux. Ce sont principalement le calcium et le magnésium ainsi que les carbonates dont la dissolution est cruciale pour la dureté et la saveur de l'eau. De nombreux procédés ont été décrits pour dissoudre des chlorures ou des hydroxydes de calcium et de magnésium. Néanmoins, ces sels ne permettent pas d'introduire des carbonates dont la teneur est particulièrement importante et il faut alors les introduire par l'intermédiaire d'autres sels qui rendent l'équilibrage minéral total compliqué. Le procédé de l'invention permet ainsi d'obtenir une eau riche à la fois en calcium et/ou magnésium et en bicarbonates.

Le procédé de l'invention permet de contrôler de façon précise l'apport de CO₂ dans l'eau, son taux de conversion par l'enzyme et ainsi la quantité de minéraux dissouts.

Le procédé de l'invention permet également d'obtenir une eau limpide en sortie du système permettant de le mettre en oeuvre. Que ce soit à l'échelle domestique ou à l'échelle industrielle, l'obtention d'eau limpide est capitale, afin de que des canalisations et/ou conduites que l'eau reminéralisée doit traverser ne s'encrassent pas par accumulation de particules solides, ce qui pourrait engendrer des variations de débits de l'eau, une baisse de l'efficacité du système et des coûts de maintenance élevés. Une eau limpide est également souhaitée par l'utilisateur final.

Il peut également être intéressant de placer un filtre sélectif retenant sélectivement les substances organiques le long du canal, en aval des enzymes, afin d'éliminer toutes traces d'enzymes ou de résidus d'enzymes dans l'eau produite, sans toutefois éliminer les minéraux ni l'acide carbonique ou le bicarbonate. Un tel filtre sélectif peut par exemple être un filtre au charbon actif ou tout autre filtre présentant des fonctions similaires.

L'invention sera mieux comprise à l'aide de la description suivante de plusieurs formes de réalisation de l'invention, en référence au dessin en annexe, sur lequel :
la figure 1 illustre un premier mode de réalisation de l'invention;
la figure 2 illustre un deuxième mode de réalisation de l'invention,
la figure 3 illustre un troisième mode de réalisation de l'invention,
la figure 4 illustre un quatrième mode de réalisation de l'invention, et
la figure 5 illustre une cartouche selon l'invention.

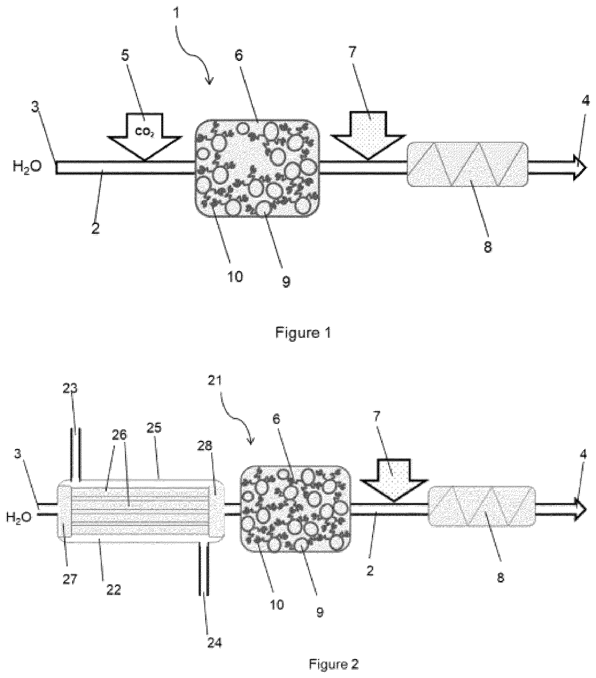

En référence à la figure 1, un système 1 de reminéralisation d'eau au moins en partie déminéralisée comprend un canal 2, de circulation d'eau d'une entrée 3 vers une sortie 4 entre lesquelles sont disposées une arrivée 5 de dioxyde de carbone, un compartiment ou cartouche 6 contenant des billes 9 sur lesquelles sont greffées des enzymes 10 aptes à catalyser la réaction du dioxyde de carbone, par exemple de l'anhydrase carbonique, un injecteur à poudres 7 un mélangeur statique 8.

L'arrivée 5 de dioxyde de carbone (CO₂) peut être n'importe quel moyen d'introduction de CO₂ dans un flux d'eau bien connu de l'homme du métier comme, par exemple, un tuyau connecté à une source de dioxyde de carbone sous pression, par exemple une bouteille ou un générateur de CO₂, et comprenant une valve pour réguler le débit de CO₂. Le type d'installation pour l'arrivée de CO₂ dépend principalement de la taille du système, notamment des débits et des volumes d'eau à gérer.

Le compartiment 6 contenant des billes 9 sur lesquelles sont greffées des enzymes 10 aptes à catalyser la réaction du dioxyde de carbone, par exemple de l'anhydrase carbonique, est typiquement similaire dans sa structure à n'importe quelle colonne de résines échangeuse d'ions couramment utilisées dans le traitement de l'eau. Les billes peuvent être en résine polyamide, dérivé cellulosique, dérivés de polysaccharides ou tout autre polymère adapté pour un greffage enzymatique, technique bien connue de l'homme du métier.

L'injecteur à poudres 7 est un moyen d'injection d'une quantité prédéterminée de poudre. Il peut par exemple être un dispositif de microdosage, comme par exemple une pompe ou vanne micro-doseuse ou un dispositif de microdosage de poudre micronisée. Un tel dispositif peut comprendre par exemple un système à ultrasons comportant une buse de dosage dont le diamètre est de 100 à 400 microns, ou un système similaire à ceux utilisés en imprimerie 3D, comme par exemple ceux décrits par X Lu, S Yang et JRG Evans (Microfeeding with different ultrasonic nozzle designs ; - Ultrasonics, 2009; Dry powder microfeeding system for solid freeform fabrication : Solid Freeform Fabrication Symposium, Austin, TX, 2006 ; Metering and dispensing of powder : the quest for new solid freeforming techniques, Powder Technology, 178(1), 56-72. DOI: 10.1016/j.powtec.2007.04.004).

La poudre injectée par l'injecteur 7 est de préférence du carbonate de calcium et/ou du carbonate de magnésium.

On peut par exemple utiliser une poudre de synthèse ou de l'aragonite micronisée. L'aragonite est la forme polymorphique stable à haute température et haute pression du carbonate de calcium, les deux autres polymorphes stables en conditions ambiantes étant la calcite et la vatérite. L'aragonite oolithique marin est notamment originaire des Bahamas et de Floride. Les poudres de synthèses désignent ici des sels minéraux bien particuliers, comme par exemple du carbonate de calcium, obtenus par précipitation dans des conditions particulières conférant aux particules des dimensions et propriétés spécifiques. Par exemple, l'article de Brečević, L. et Kralj, D. (*2007 ; on calcium carbonates: from fundamental research to application. Croatica Chemica Acta, 80(3-4), 467-484)* passe en revue les techniques permettant d'obtenir des formes polymorphiques de carbonate de calcium. Cet article décrit en particulier la formation de carbonate de calcium amorphe, moins stable que les formes cristallines (calcite, vatérite) ou hydratées, mais présentant un taux de dissolution plus élevé et qui peuvent avantageusement être utilisées pour la mise en oeuvre du procédé de l'invention. L'aragonite peut elle aussi être obtenue par synthèse. Des poudres de synthèse de carbonate de calcium et/ou de carbonate de magnésium peuvent par exemple être utilisées, de préférence au moins en partie sous forme amorphe.

Selon la nature ou la quantité de minéraux que l'on souhaite dissoudre dans l'eau, plusieurs injecteurs à poudres successifs peuvent être disposés le long du canal 2.

Le mélangeur statique 8 est par exemple un mélangeur hélicoïdal. Il permet d'augmenter la turbidité dans le flux d'eau et d'améliorer la dissolution de la poudre injectée.

En pratique, de l'eau à faible teneur en minéraux, par exemple de l'eau de source, de l'eau déminéralisée ou de l'eau désalinisée entre dans le canal 2 au niveau de l'entrée 3.

Du CO₂ est injectée sous forme gazeuse au niveau de l'arrivée 5 CO₂. L'eau se charge en CO₂ qui s'y dissout en faible proportion avant de pénétrer dans le compartiment 6.

Dans ce compartiment 6, au contact et sous l'action des enzymes, la partie dissoute du CO₂ réagit avec l'eau pour former de l'acide carbonique et/ou du bicarbonate selon l'équation H₂O + CO₂ ↔ H₂CO₃ ↔ HCO₃⁻ + H⁺. Le bicarbonate est soluble dans l'eau sous sa forme ionique et sa formation induit une diminution du pH de l'eau.

De préférence, le pH atteint grâce à l'action de l'anhydrase carbonique est situé entre 4.5 et 5.5, et de préférence encore entre 4.9 et 5.4.

L'action de l'enzyme permet de déplacer l'équilibre de dissolution du CO₂ dans l'eau et d'atteindre une concentration de bicarbonate qu'il n'est pas possible d'atteindre par d'autres techniques en ligne, c'est à dire sans arrêter le courant d'eau dans le compartiment 6. Il a de plus été observé par la demanderesse que, contrairement à ce qui aurait pu être attendu, cet équilibre induit par les enzymes est maintenu pendant plusieurs secondes dans l'eau s'écoulant du compartiment 6, ce qui laisse amplement le temps à l'eau ainsi acidifiée d'atteindre la partie du canal où a lieu la reminéralisation. L'aspect « en ligne » est donc ici particulièrement avantageux.

Un filtre à charbon actif, ou tout autre filtre sélectif de substance organique, peut être inséré dans le système, par exemple avant ou après l'injecteur de poudre 7. Cela permet d'éliminer de l'eau toute trace éventuelle d'enzyme ou de résidu d'enzyme, sans modifier la composition en minéraux et/ou en acide carbonique ou bicarbonate.

En sortie du compartiment 6, l'eau à faible teneur en minéraux et à forte teneur en bicarbonate est reminéralisée par injection, à une fréquence régulière déterminée par le débit de l'eau et la teneur souhaitée en minéraux, d'une quantité déterminée de poudre 7, typiquement du carbonate de magnésium et/ou de calcium. La poudre se dissout dans l'eau circulant à une vitesse optimisée grâce au pH de l'eau qui a été diminué par la dissolution du CO₂. L'anhydrase carbonique est essentielle pour qu'une dissolution suffisante du CO₂ puisse avoir lieu en ligne, c'est-à-dire sans arrêter l'eau dans un réservoir jusqu'à dissolution complète.

Ces deux espèces chimiques, magnésium et calcium, sont en effet particulièrement difficile à dissoudre en ligne, c'est-à-dire sans devoir agiter pendant une longue durée la poudre avec l'eau à reminéraliser. Des concentrations similaires à celles rencontrées dans les eaux minérales riches en calcium et magnésium sont notamment impossible à atteindre sans l'action de l'enzyme décrite plus haut.

Le système de l'invention peut ainsi se révéler particulièrement intéressant pour des systèmes de production en ligne d'eau minérale à teneur prédéterminée en minéraux tels que décrits dans la demande PCT/EP2018/057868.

Par exemple, pour reproduire une eau minérale de type Geroldsteiner^{®} dont la composition est décrite dans le tableau 1 du document précité, à partir d'une eau préalablement déminéralisée, il est nécessaire d'apporter 1816 mg/L de bicarbonate, 348 mg/L de calcium et 108 mg/L de magnésium. Au regard des résultats obtenus dans Desalinisation 396, (2016) 39-47*,* (table 1, run 6), il serait au mieux possible d'obtenir le pH final de 5.9, mais une concentration maximale de 20 mg/L de calcium (0.53 mm Ca²⁺) et 8 mg/L de magnésium (0.36 mm Mg²⁺) en faisant passer une solution dans laquelle on a introduit du CO₂ sous forme gazeuse sur de la dolomite pendant plus de 12 minutes. On serait donc loin de pouvoir reproduire la composition de l'eau Gerolsteiner^{®}.

**Tableau 1.**

| Élément minéral | Gerolsteiner (mg/L) |
|---|---|
| Ca²⁺ | 348 |
| Mg²⁺ | 108 |
| Na⁺ | 118 |
| K⁺ | 10.8 |
| HCO₃⁻ | 1816 |
| SO₄²⁻ | 38.7 |
| Cl⁻ | 39.7 |
| NO₃⁻ | 5.1 |
| Matière totale dissoute | 2488 |
| pH | 5.9 |

Il existe d'autres moyens que l'ajout direct de CO₂ sous forme gazeuse pour introduire du dioxyde de carbone dans le canal.

En référence à la figure 2, un système 21 de reminéralisation d'eau au moins en partie déminéralisée comprend, comme décrits sur la figure 1, un canal 2, de circulation d'eau d'une entrée 3 vers une sortie 4 entre lesquelles sont disposées des moyens 25 d'introduction de dioxyde de carbone, une cartouche 6 contenant des billes 9 sur lesquelles sont greffées des enzymes 10 aptes à catalyser la réaction du dioxyde de carbone, par exemple de l'anhydrase carbonique, un injecteur à poudres 7 un mélangeur statique 8.

Les moyens 25 d'introduction de dioxyde de carbone sont ici constitués d'une chambre 22 équipée d'une arrivée 23 et d'une sortie 24 de CO₂. Le canal 2, après l'entrée 3, se poursuit en un compartiment 27 d'anastomose où le canal est divisé en une pluralité ou un faisceau de fibres creuses 26 (quatre sont ici représentées) s'étendant le long de la chambre 22 jusqu'à un second compartiment 28 d'anastomose où les fibres creuses 26 se rejoignent avant que le canal sorte de la chambre 25. Les fibres creuses 26 sont ici des tubes fabriqués à partir d'une membrane perméable au CO₂. L'arrivée 23 et la sortie 24 de CO₂ sont équipées de vannes (non représentées) permettant d'ajuster la pression dans la chambre 22. Un tel module peut par exemple être le MiniModule^{®} de la société 3M comprenant quarante fibres creuses en polypropylene/epoxy parcourant une cartouche qui peut être mise sous pression d'un gaz.

En règle générale, la pression de CO₂ appliquée à la paroi extérieure de la membrane perméable au CO₂ est de préférence comprise entre 1 et 6 bar, à température ambiante.

En pratique, l'eau circulant dans le canal 2 parcourt les fibres creuses 26. Les compartiments 27 et 28 d'anastomose permettent de gérer le débit et la pression de l'eau lors de la division du canal en faisceaux et du rassemblement des faisceaux en un courant unique. Du dioxyde de carbone est introduit dans la chambre 22 par l'arrivée 23 de façon à ce qu'il y ait une pression supérieure à la pression de CO₂ dans l'eau circulant, afin de favoriser le passage du CO₂ dans l'eau circulant dans les faisceaux. Les vannes placées à l'arrivée 23 et la sortie 24 de CO₂ permettent d'ajuster cette pression en fonction de la quantité de CO₂ qu'il est souhaitable d'introduire dans l'eau en fonction du résultat souhaité, c'est-à-dire de la quantité de CO₂ qui peut réagir au contact des enzymes dans la cartouche 6 et du pH à atteindre en aval pour la bonne dissolution des minéraux en poudre.

Ce type de chambre parcourue par un faisceau de membranes perméables au dioxyde de carbone est connu et utilisé pour extraire le CO₂ de fumées industrielles afin de limiter le rejet de CO₂ dans l'atmosphère. En général, le CO₂ est adsorbé par une solution aqueuse comprenant divers solvants améliorant la dissolution du CO₂. Ces systèmes ne prévoient cependant pas de prélever une quantité déterminée de CO₂ comme c'est ici le cas. De plus, dans le cadre du traitement d'eau, en vue d'une consommation humaine, il est ici impossible d'utiliser des solvants pour améliorer le prélèvement du CO₂.

La division du canal en faisceau permet une plus grande surface de contact entre l'eau circulant et le CO₂ dans la chambre, via les pores de la membrane perméable au CO₂. La surface de contact optimale peut être calculée en fonction des applications (industrielle ou domestique) et du volume d'eau à traiter.

Les matériaux utilisables pour des membranes perméables au CO2 sont par exemple du polypropylène, du PTFE (Teflon), du polyimide, des polyoléfines, etc... De telles membranes sont commerciales, comme par exemple Superphobic ^{®} Contactors by Membrana GmbH ou Celgard X40-200 or X30-240.

Comme pour le bullage du CO₂, cette technique permet de traiter l'eau en continu, sans immobiliser l'eau dans un réservoir.

La chaine de traitement peut être encore optimisée, notamment en s'affranchissant de la cartouche 6 et en immobilisant les enzymes 10 directement à l'intérieur des faisceaux de fibres creuses 26, en utilisant par exemple les techniques standard d'immobilisation d'enzymes sur un matériau polymérique.

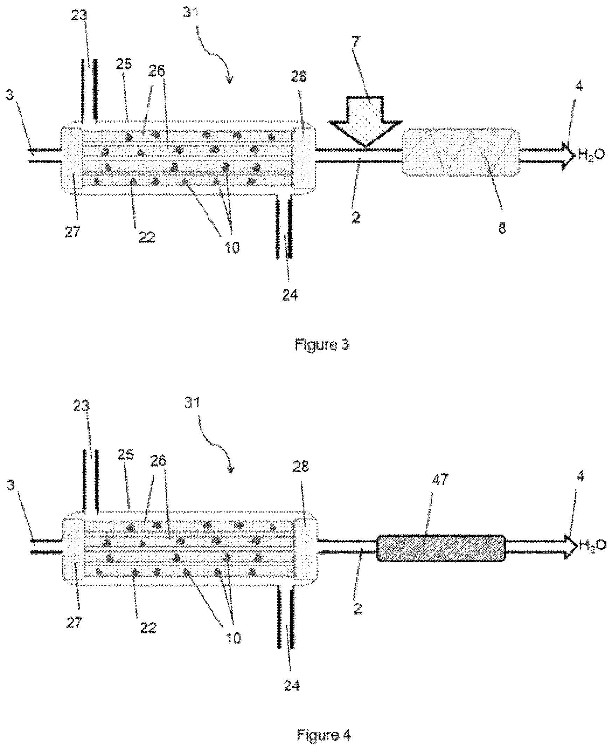

En référence à la figure 3, où les éléments communs aux figures précédentes sont numérotés de façon identique, un système 31 de reminéralisation d'eau au moins en partie déminéralisée comprend un canal 2, de circulation d'eau d'une entrée 3 vers une sortie 4, entre lesquelles est disposée une chambre 22 similaire à celle décrite en référence à la figure 2, parcourue par un faisceau de fibres creuses 26. Des enzymes 10 aptes à catalyser la réaction du dioxyde de carbone, par exemple de l'anhydrase carbonique, sont immobilisées à l'intérieur des fibres creuses, sur la paroi interne de la membrane. Ainsi, l'eau parcourant le canal 2 se charge en CO₂ le long des faisceaux de fibres creuses 26. Le CO₂ étant converti en bicarbonate sous l'action des enzymes 10 au fur et à mesure que l'eau parcoure la fibre creuse 26, l'absorption de CO₂ le long de la fibre peut être optimisé et des quantités supérieures de bicarbonates peuvent être produites. En s'affranchissant de la cartouche 6, il est ainsi possible de limiter la longueur du canal et de réduire le coût global de l'installation.

L'injecteur de poudres 7 et le mélangeur 8 sont ici installés en aval de l'unité 25. Le mélangeur statique a été décrit comme étant un mélangeur hélicoïdal, mais pourrait être tout autre type de mélangeur connu de l'homme du métier.

L'injecteur de poudre n'est pas la seule façon d'introduire des minéraux, sous forme solide, dans l'eau circulant dans le canal.

Le dispositif de la figure 4 illustre un dispositif similaire à celui de la figure 3 où l'injecteur de poudres 7 et l'insert hélicoïdal 8 sont remplacés par une colonne minérale 47, ici par exemple une colonne Akdolit^{®} CM (Magno Dol), ou toute autre colonne fonctionnant sur le même principe. La colonne fait partie du canal 2, elle représente une portion du canal 2.

La même modification pourrait d'ailleurs également être faite sur les autres systèmes décrits plus haut.

L'eau circulant dans le canal 2 traverse le lit de granules de dolomie et se charge, à leur contact, de magnésium, calcium et hydrogénocarbonates. La dissolution de ces espèces dans l'eau est optimisée grâce au pH de l'eau qui a été diminué par la dissolution du CO₂. L'anhydrase carbonique est essentielle pour déplacer l'équilibre d'acidification de l'eau suffisamment longtemps pour qu'une dissolution suffisante du CO2 puisse avoir lieu en ligne, c'est-à-dire sans arrêter l'eau dans un réservoir.

Dans tous les modes de réalisations décrits, il est envisageable d'avoir plus d'un injecteur de poudre et/ou plus d'une colonne minérale ou une combinaison des deux, placés en amont et/ou en aval des moyens d'introduction de CO2 dans le canal. Par exemple, un injecteur pourrait être placé en amont de l'introduction de CO₂ pour injecter une partie des poudres à dissoudre, une colonne minérale pourrait par exemple être installée en aval pour compléter la teneur en minéraux. La dissolution pourrait ainsi être réalisée en plusieurs temps et répartie sur une plus longue partie du système.

Selon la nature des minéraux à dissoudre dans l'eau, certains pourraient être injectés séparément, avant ou après l'introduction du CO₂ ou l'injection des poudres de carbonate de calcium et/ou magnésium.

Il est envisageable, pour une installation domestique comme celle décrite dans PCT/EP2018/057868 de fournir l'unité 25 sous forme de cartouche consommable, à changer au bout de quelques mois, lorsque l'activité enzymatique est réduite.

Pour une installation industrielle, il est également possible de fournir l'unité 25 sous forme de colonnes interchangeables, éventuellement recyclables.

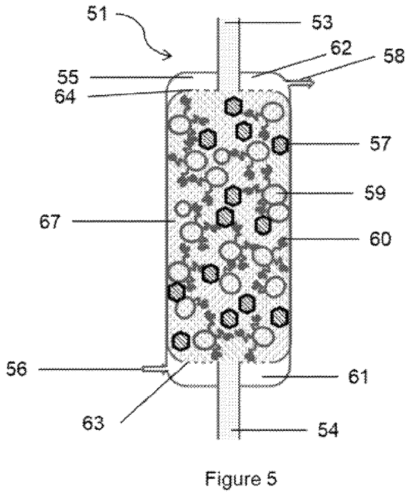

La figure 5 illustre une autre forme de réalisation de l'invention, sous forme d'une cartouche 51.

La cartouche 51 comprenant une entrée 53 d'eau à reminéraliser, ici en haut de la cartouche, et une sortie 54 d'eau reminéralisée, ici en bas de la cartouche. L'introduction de dioxyde de carbone 55 dans la cartouche se fait par une arrivée 56 de dioxide de carbone, ici dans la section basse de la cartouche, via un compartiment 61. Le compartiment 61 présente une interface 63 avec un lit 67 de billes 59 et 57 mélangées. Les billes 57 sont des billes minérales, tandis que les billes 59 supportent les enzymes 60 catalysant la réaction du dioxyde de carbone et de l'eau pour former de l'acide carbonique puis du bicarbonate. Le lit 67 de billes mélangées est ici un cylindre qui occupe l'essentiel de la cartouche. Au sommet de la cartouche, le lit 67 de billes mélangées présente une interface 64 avec un compartiment 62 relié à une sortie 58 de dioxide de carbone.

L'eau entrant dans la cartouche 51 circule à travers le lit 67 mais ne pénètre pas dans les compartiments 61 et 62. Le dioxide de carbone travserse quant à lui le compartiment 61, puis le lit 67 de billes mélangées et enfin le compartiment 62. Les comaprtiments d'arrivée 61 et de sortie 62 de dioxide de carbone sont facultatifs, mais peuvent permettre de réguler le débit et la pression de dioxyde de carbone traversant le lit 67.

D'autres systèmes peuvent être proposés, par exemple avec un système de valves et/ou de manomètre.

Les interfaces entre le lit 67 de billes mélangées et les compartiments d'arrivée 61 et de sortie 62 de dioxyde de carbone peuvent par exemple être des membranes permettant un bullage du dioxyde de carbone à travers le lit, mais ne permettant pas le passage de l'eau. Il pourrait également s'agir d'un simple tuyau, muni éventuellement d'une valve.

On notera qu'ici le dioxyde de carbone est introduit à contre-courant du débit d'eau. Cela permet d'augmenter le temps de résidence du dioxyde de carbone dans le lit 67 de billes mélangées.

La cartouche 51 peut être pourvue, au niveau de l'entrée d'eau 53 et de la sortie d'eau 54 de moyens de raccordement faciles à un circuit d'eau domestique ou industrielle, éventuellement en aval d'autres unités comme un adoucisseur ou une unité de déminéralisation, afin de pouvoir être facilement remplacée. Tout moyen adapté, connu de l'homme du métier est ici envisageable. Il en est de même pour l'arrivée et la sortie de dioxyde de carbone.

L'invention ne se limite pas à la production d'eau minérale, mais peut également être mise en oeuvre pour produire des concentrés minéraux, comme ceux par exemple utilisés dans la méthode et le système de la demande WO2019020221 ou pour des concentrés minéraux pharmaceutiques.

### Déclarations

Déclaration 1 : Procédé de minéralisation d'eau en ligne selon lequel :
- on fait circuler de l'eau déminéralisée dans un canal (2 ; 67) à l'intérieur duquel sont immobilisées des enzymes (10, 60) pour catalyser la réaction du dioxyde de carbone et de l'eau pour former du bicarbonate,
- on introduit du dioxyde de carbone dans le canal (2), et
- on introduit dans l'eau circulant une quantité prédéterminée de minéraux solides.

Déclaration 2 : Procédé selon la déclaration 1, dans lequel pour introduire une quantité de minéraux :
- on injecte une poudre minérale (7) et/ou
- on fait circuler l'eau dans le canal à travers une colonne minérale (67) .

Déclaration 3 : Procédé selon l'une des déclarations 1 et 2 selon lequel on choisit la nature et la quantité d'enzymes, ainsi que la quantité de dioxyde de carbone introduites de manière à obtenir un pH de valeur prédéterminée.

Déclaration 4 : Procédé selon l'une des déclarations 1 à 3, dans lequel le canal (2 ; 67) est perméable au dioxyde de carbone sur au moins une partie de sa longueur et dans lequel on introduit le dioxyde de carbone par application sur la paroi extérieure du canal d'une pression de dioxyde de carbone.

Déclaration 5 : Procédé selon l'une des déclarations 1 à 4 dans lequel les enzymes catalysant la réaction du dioxyde de carbone et de l'eau pour former du bicarbonate sont de l'anhydrase carbonique.

Déclaration 6 : Procédé selon l'une des déclarations 1 à 5, dans lequel on fait circuler l'eau déminéralisée à travers une colonne minérale (51) comprenant, mélangées, des billes (57) de minéraux et des billes (59) sur lesquelles sont greffées les enzymes (60).

Déclaration 7. Procédé selon l'une des déclarations 1 à 6, selon lequel on introduit du dioxyde de carbone par bullage.

Déclaration 8. Procédé selon la déclaration 7, selon lequel on fait buller le dioxyde de carbone à contre-courant de la circulation d'eau. Déclaration 9. Procédé selon l'une des déclarations 1 à 8, dans lequel les minéraux comprennent du carbonate de calcium et/ou de magnésium.

Déclaration 10. Procédé selon l'une des déclarations 1 à 8, dans lequel fait circuler l'eau à travers un filtre retenant sélectivement les substances organiques disposé en aval des enzymes.

Déclaration 11. Système (1, 21, 31, 51) de reminéralisation d'eau déminéralisée comprenant un canal (2) de circulation d'eau d'une entrée (3, 53) vers une sortie (4, 54) le long duquel sont agencés :
- des moyens (25, 56) d'introduction de dioxyde de carbone dans le canal ;
- des enzymes (10, 60) aptes à catalyser la réaction du dioxyde de carbone et de l'eau pour former du bicarbonate immobilisées à l'intérieur dudit canal, et
- des moyens (7, 67) d'introduction d'une quantité prédéterminée de minéraux solides, de préférence comprenant du carbonate de calcium et/ou de magnésium.

Déclaration 12. Système selon la déclaration 11, dans lequel les moyens d'introduction de dioxyde de carbone dans le canal comprennent une paroi (26, 63) perméable au dioxyde de carbone sur au moins une partie de la longueur du canal (2, 51) et des moyens (24, 61) pour appliquer une pression de dioxyde de carbone sur la face extérieure de ladite paroi perméable au dioxyde de carbone.

Déclaration 13 : Système selon la déclaration 12, dans lequel les moyens pour appliquer une pression de dioxyde de carbone sur la face extérieure de la paroi perméable au dioxyde de carbone comprennent une chambre hermétique (22, 61) connectée à une arrivée (54, 56) de dioxyde de carbone sous pression et traversée par au moins la partie du canal comprenant la paroi perméable au dioxyde de carbone.

Déclaration 14. Système selon l'une des déclarations 11 à 13, dans lequel les moyens d'introduction d'une quantité prédéterminée de minéraux comprennent un injecteur de poudre (7) et/ou une colonne minérale (47, 67).

Déclaration 15. Système selon l'une des déclarations 11 à 14, agencé sous forme de cartouche (51) comprenant une entrée (53) d'eau à reminéraliser et une sortie (54) d'eau reminéralisée, des moyens d'introduction (56) de dioxyde de carbone dans la cartouche, ladite cartouche contenant un mélange de billes (57) minérales et de billes (59) sur lesquelles sont greffées les enzymes (60) catalysant la réaction du dioxyde de carbone (55) et de l'eau pour former de l'acide carbonique puis du bicarbonate.

Déclaration 16. Système selon la déclarations 15 dans lequel les moyens (56) d'introduction de dioxyde de carbone dans la cartouche sont agencés pour permettre la circulation du dioxyde de carbone (55) à travers le lit (67) de billes mélangées, de préférence à contre-courant de la circulation de l'eau.

Déclaration 17. Système selon l'une des déclarations 11 à 16, dans lequel un filtre retenant sélectivement les substances organiques est agencé le long du canal, en aval des enzymes.

## Revendications

1. Procédé de reminéralisation d'eau en ligne selon lequel:
- on fait circuler de l'eau déminéralisée dans un canal, dans lequel on introduit du dioxyde de carbone, à l'intérieur duquel sont immobilisées des enzymes anhydrase carbonique pour catalyser la réaction du dioxyde de carbone et de l'eau pour former du bicarbonate,
- on introduit dans l'eau circulant une quantité prédéterminée de minéraux solides en utilisant une colonne minérale installé en aval des enzymes, et
- on fait circuler l'eau à travers un filtre retenant sélectivement les substances organiques disposé en aval des enzymes afin d'éliminer toutes traces d'enzymes ou de résidus d'enzymes dans l'eau produite, sans toutefois éliminer les minéraux ni l'acide carbonique ou le bicarbonate.

2. Procédé selon l'une des revendications 1, dans lequel le canal est perméable au dioxyde de carbone sur au moins une partie de sa longueur et dans lequel on introduit le dioxyde de carbone par application sur la paroi extérieure du canal d'une pression de dioxyde de carbone.

3. Procédé selon l'une des revendications 1 à 2, selon lequel on introduit du dioxyde de carbone par bullage.

4. Procédé selon l'une des revendications 1 à 3, dans lequel les minéraux comprennent du carbonate de calcium et/ou de magnésium.

5. Système de reminéralisation d'eau déminéralisée adapté à la mise en oeuvre d'un procédé selon l'une des revendication précédentes et comprenant un canal de circulation d'eau d'une entrée vers une sortie le long duquel sont agencés :
- des moyens d'introduction de dioxyde de carbone dans le canal ;
- des enzymes anhydrase carbonique aptes à catalyser la réaction du dioxyde de carbone introduit et de l'eau pour former du bicarbonate immobilisées à l'intérieur dudit canal, et
- une colonne minérale pour l'introduction d'une quantité prédéterminée de minéraux solides, de préférence comprenant du carbonate de calcium et/ou de magnésium, en aval des moyens d'introduction de dioxyde de carbone et des enzymes;
dans lequel un filtre retenant sélectivement les substances organiques est agencé le long du canal, en aval des enzymes.

6. Système selon la revendication 5, dans lequel la colonne minérale fait partie du canal.

7. Système selon l'une des revendications 5 à 6, dans lequel les moyens d'introduction de dioxyde de carbone dans le canal comprennent une paroi perméable au dioxyde de carbone sur au moins une partie de la longueur du canal et des moyens pour appliquer une pression de dioxyde de carbone sur la face extérieure de ladite paroi perméable au dioxyde de carbone.

8. Système selon la revendication 7, dans lequel les moyens pour appliquer une pression de dioxyde de carbone sur la face extérieure de la paroi perméable au dioxyde de carbone comprennent une chambre hermétique connectée à une arrivée de dioxyde de carbone sous pression et traversée par au moins la partie du canal comprenant la paroi perméable au dioxyde de carbone.
